# FASCICULE DE BREVET EUROPEEN

(11) **EP 0 729 167 B1**
(45) Date de publication et mention de la délivrance du brevet: **28.04.1999**
(21) Numéro de dépôt: 96400349.5
(22) Date de dépôt: 20.02.1996
(51) Int. Cl.: H01H 71/08, H02B 1/20

(54) **Appareil électrique modulaire à évidement sur une face latérale**
Modulares elektrisches Gerät mit eine Aussparung in eine Seitenfläche
Modular electrical apparatus with a recess in a lateral face

(30) Priorité: 21.02.1995 FR 9501965; 22.12.1995 FR 9515421
(43) Date de publication de la demande: 28.08.1996
(73) Titulaire: LEGRAND, F-87045 Limoges Cédex (FR); LEGRAND SNC, F-87045 Limoges (FR)
(72) Inventeur: Combas, Christian, 87240 Ambazac (FR)
(74) Mandataire: CABINET BONNET-THIRION

(56) Documents cités:
- EP-A- 0 387 158
- EP-A- 0 454 016
- EP-A- 0 454 019
- DE-U- 8 804 649
- FR-A- 2 427 679

## Description

La présente invention concerne d'une manière générale les appareils électriques modulaires, c'est-à-dire les appareils électriques dont le boîtier, en forme générale de plaquette, présente deux faces principales parallèles, et, reliant celles-ci suivant leur contour, une face arrière, par laquelle ils sont adaptés à être rapportés sur un quelconque support, une face avant, sur laquelle intervient éventuellement un quelconque organe à la disposition de l'usager, et, en alternance, chacune respectivement, avec cette face arrière et cette face avant, deux faces latérales.

De tels appareils électriques sont usuellement disposés côte à côte en rangée sur un même support, avec l'une de leurs faces latérales orientée vers le haut et l'autre orientée vers le bas.

Il peut s'agir aussi bien d'appareils principaux, de commande, ou de puissance, qui, tels que des disjoncteurs par exemple, sont interposés sur l'alimentation de quelconques charges éloignées, avec une entrée de cette alimentation sur l'une de leurs faces latérales et une sortie sur l'autre de celles-ci, que d'appareils auxiliaires, qui, tels que des voyants par exemple, sont associés à ces appareils principaux, en étant directement ou indirectement asservis à ceux-ci.

Une difficulté intervient lorsque, dans une même rangée, des appareils auxiliaires doivent côtoyer des appareils principaux, et que, pour l'entrée d'une alimentation commune à l'ensemble de ces derniers, il est mis en oeuvre une barre bus en forme de peigne.

En effet, si, par les bornes de connexion dont ils sont dotés, les appareils principaux sont aptes à recevoir chacun respectivement par l'une de celles-ci l'une des dents d'un tel peigne, il n'en est usuellement pas de même pour les appareils auxiliaires, ces appareils auxiliaires ne comportant pas nécessairement de telles bornes de connexion, et, lorsqu'ils en comportent, celles-ci n'étant normalement pas prévues à cet effet.

Il faut donc normalement dans ce cas soit renoncer à la mise en oeuvre d'un tel peigne, au prix d'une complication du câblage pour l'ensemble, soit procéder à l'élimination d'une ou plusieurs dents de ce peigne au droit des appareils auxiliaires.

Il a cependant été déjà proposé de longue date, dans une réalisation pratique dûment commercialisée en son temps, une disposition, qui a été reprise dans le brevet français déposé sous le No 89 03278 et publié sous le No 2 644 300 qui forme la base du préambule de la revendication 1, et suivant laquelle il est prévu, sur la face latérale concernée des appareils auxiliaires, un évidement, qui est propre à recevoir librement l'une au moins des dents d'un peigne formant une barre bus pour d'autres appareils électriques alignés avec celui concerné, et qui, en pratique, n'a pas d'autre but.

Mais une difficulté complémentaire intervient si le peigne peut occuper l'une ou l'autre de plusieurs positions.

Or tel est précisément le cas suivant que les appareils électriques à desservir sont des appareils électriques bipolaires ou unipolaires, et suivant que, s'agissant de la desserte d'appareils électriques bipolaires, le peigne est un peigne de phase ou un peigne de neutre.

A chaque fois, les dents du peigne doivent pouvoir intervenir à un endroit déterminé de la face latérale correspondante des appareils électriques auxiliaires.

Il faut donc prévoir, sur cette face latérale, soit autant d'évidements distincts, et donc chacun d'emprise nécessairement limitée, qu'il y a d'endroits possibles pour l'intervention d'une dent d'un tel peigne, soit un évidement unique d'emprise suffisante pour satisfaire à lui seul à l'ensemble de ces endroits.

Dans le premier cas, la mise en place du peigne devient délicate, parce que, compte tenu de l'emprise limitée des évidements, elle doit se faire suivant une implantation relativement rigoureuse, pour que les diverses dents du peigne tombent chacune au bon endroit.

Dans le deuxième cas, la mise en place du peigne se trouve facilitée, mais, eu égard à l'emprise relativement grande de l'évidement, l'engagement d'une dent du peigne dans cet évidement peut se faire à un endroit de celui-ci pour lequel, de manière intempestive, cette dent est accessible de l'extérieur au toucher, et, plus précisément, de l'avant, notamment par le doigt d'essai usuellement prévu pour le contrôle d'un tel accès par les dispositions normatives en matière de sécurité.

La présente invention a d'une manière générale pour objet une disposition permettant de surmonter cette difficulté.

De manière plus précise, elle a pour objet un appareil électrique modulaire, du genre dont le boîtier présente deux faces principales parallèles, et, reliant celles-ci suivant leur contour, une face arrière, une face avant et deux faces latérales, avec, sur l'une au moins de ces dernières, un évidement propre à recevoir librement l'une au moins des dents d'un peigne formant une barre bus pour d'autres appareils électriques alignés avec celui concerné, cet appareil électrique modulaire étant d'une manière générale caractérisé en ce que, sur une partie au moins de sa profondeur, l'évidement est au moins partiellement compartimenté par au moins une cloison, dite ici par simple commodité cloison verticale, qui s'étend sensiblement parallèlement aux faces principales du boîtier.

Suivant l'endroit de l'évidement où s'engage la dent du peigne, cette dent se situe par exemple à gauche de la cloison verticale suivant l'invention, à droite de cette cloison verticale, ou dans le prolongement de celle-ci.

Dans tous les cas, tout accès à cette dent de l'avant se trouve empêché par cette cloison verticale, si le peigne est disposé au plus près de la face avant du boîtier.

Ainsi, il est trouvé un compromis particulièrement simple et avantageux entre, d'une part, l'exigence d'une isolation satisfaisante de la dent du peigne à l'égard d'un éventuel doigt d'essai introduit de l'avant, et, d'autre part, l'exigence d'une mise en place relativement aisée du peigne.

Mais, comme indiqué ci-dessus, l'isolation de la dent du peigne suppose, en fait, que ce peigne soit disposé au plus près de la face avant du boîtier.

Cela est effectivement le cas pour les appareils électriques modulaires bipolaires, pour lesquels, en pratique, deux peignes sont nécessaires, à savoir, d'une part, un peigne de phase, qui est disposé à l'avant, et dont la dent correspondante se trouve effectivement isolée de façon satisfaisante par la cloison verticale prévue à cet effet, et d'autre part, un peigne de neutre, qui est disposé à l'arrière, et dont l'accès à la dent correspondante se trouve tout naturellement empêché par le peigne de phase.

Mais, dans certains cas, au moins, il est renoncé à mettre un peigne de phase, et cela est le cas, par exemple, lorsque l'alimentation des appareils électriques modulaires concernés se fait avec trois phases et un neutre.

Dans de tels cas, le câblage des phases se fait usuellement à l'aide de fils, seul étant mis en oeuvre un peigne pour le neutre, du côté de la face arrière du boîtier.

Il y a alors, au détriment de la sécurité, le risque d'un accès de l'avant à la dent correspondante de ce peigne, celle-ci ne se trouvant plus masquée par un quelconque autre peigne.

Un développement de l'invention permet de surmonter cette difficulté supplémentaire.

Suivant ce développement, l'évidement de l'appareil électrique modulaire suivant l'invention est également au moins partiellement compartimenté, sur une partie au moins de sa profondeur, par au moins une autre cloison, dite ici par simple commodité cloison horizontale, sensiblement perpendiculaire aux faces principales du boîtier.

En pratique, le débouché de l'évidement ayant un contour fermé, il y a préférentiellement deux cloisons horizontales, issues, chacune respectivement, de deux parois opposées de cet évidement parallèles aux faces principales du boîtier.

Ainsi, que la dent concernée du peigne mis en oeuvre du côté de la face arrière du boîtier s'engage dans cet évidement d'un côté ou de l'autre de celui-ci, tout accès à cette dent de l'avant se trouve empêché par l'une ou l'autre des deux cloisons horizontales mises en oeuvre suivant l'invention.

En outre, l'espace ménagé entre ces deux cloisons horizontales laisse encore avantageusement la possibilité d'implanter si désiré un peigne en position intermédiaire, la dent correspondante de ce peigne trouvant alors sa place entre elles.

Les caractéristiques et avantages de l'invention ressortiront d'ailleurs de la description qui va suivre, à titre d'exemple, en référence aux dessins schématiques annexés sur lesquels :
la figure 1 est, avec des arrachements locaux, une vue en élévation d'un appareil électrique modulaire suivant l'invention ;
la figure 2 en est une vue en plan, suivant la flèche II de la figure 1 ;
la figure 3 reprend, à échelle supérieure, le détail de la figure 2 repéré par un encart III sur cette figure 2 ;
la figure 4 est une vue en plan qui, dérivée de celle de la figure 2, illustre la mise en oeuvre de l'appareil électrique modulaire suivant l'invention dans une quelconque installation ;
la figure 5 est une vue en plan analogue à celle de la figure 4, pour une autre installation ;
la figure 6 est une vue en plan analogue à celle de la figure 2 pour un autre appareil électrique modulaire suivant l'invention.

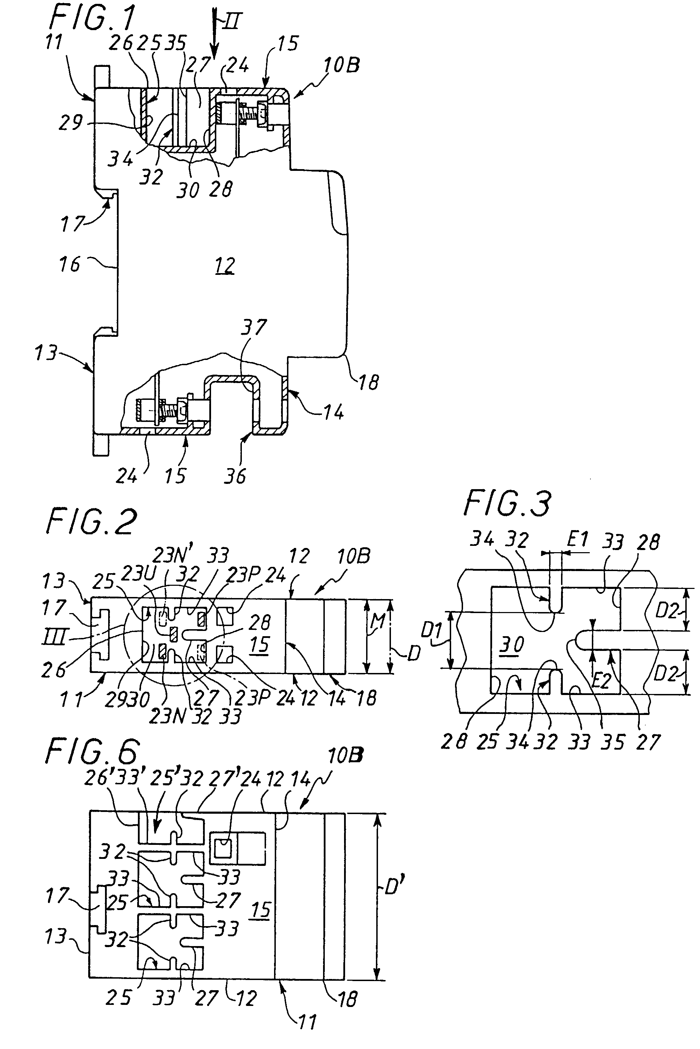

D'une manière générale, et tel qu'illustré sur ces figures, l'invention concerne des appareils électriques modulaires 10A, 10B, c'est-à-dire des appareils électriques dont le boîtier 11 présente, sous la forme générale d'une plaquette globalement parallélépipédique, d'une part, deux faces principales 12, parallèles entre elles, et écartées l'une de l'autre d'une distance D multiple d'un module de base M commun à l'ensemble, ce multiple étant en pratique égal à un pour tous les appareils électriques modulaires 10A, 10B concernés dans la forme de réalisation plus particulièrement représentée sur les figures 1 à 5, et, d'autre part, reliant l'une à l'autre ces faces principales 12, suivant leur contour, qui est en pratique globalement le même pour tous, une face arrière 13, une face avant 14, et, en alternance avec cette face arrière 13 et cette face avant 14, deux faces latérales 15.

Il s'agit, d'une part, d'appareils électriques modulaires 10A principaux, et, d'autre part, d'appareils électriques modulaires 10B auxiliaires.

Dans une installation, ces appareils électriques modulaires 10A, 10B sont alignés de manière jointive par les faces principales 12 de leur boîtier 11, en étant disposés côte à côte, en rangée, sur un même support, et en alternant les uns avec les autres au sein d'une telle rangée.

En pratique, ils sont usuellement rapportés verticalement sur leur support par la face arrière 13 de leur boîtier 11, en sorte que, tel que représenté pour un appareil électrique modulaire 10B auxiliaire sur la figure 1, l'une des faces latérales 15 de leur boîtier 11 est orientée vers le haut tandis que l'autre est orientée vers le bas.

Dans les formes de réalisation représentées, le support des appareils électriques modulaires 10A, 10B est supposé être un rail à profil transversal dit en chapeau, ou en oméga, en sorte que la face arrière 13 du boîtier 11 de ces appareils électriques modulaires 10A, 10B présente, pour leur engagement sur un tel rail, une encoche 16, à la faveur de laquelle intervient, en pratique, un dispositif d'encliquetage 17.

De manière connue en soi, la face avant 14 de ce boîtier 11 est sensiblement parallèle à sa face arrière 13, avec, en saillie dans sa zone médiane, une partie de façade 18 sur laquelle intervient éventuellement un quelconque organe ou composant à la disposition de l'usager.

Conjointement, les faces latérales 15 sont globalement perpendiculaires aux faces arrière 13 et avant 14.

De manière également connue en soi, les appareils électriques modulaires 10A principaux sont des appareils électriques de commande, ou de puissance, interposés sur l'alimentation de quelconques charges éloignées.

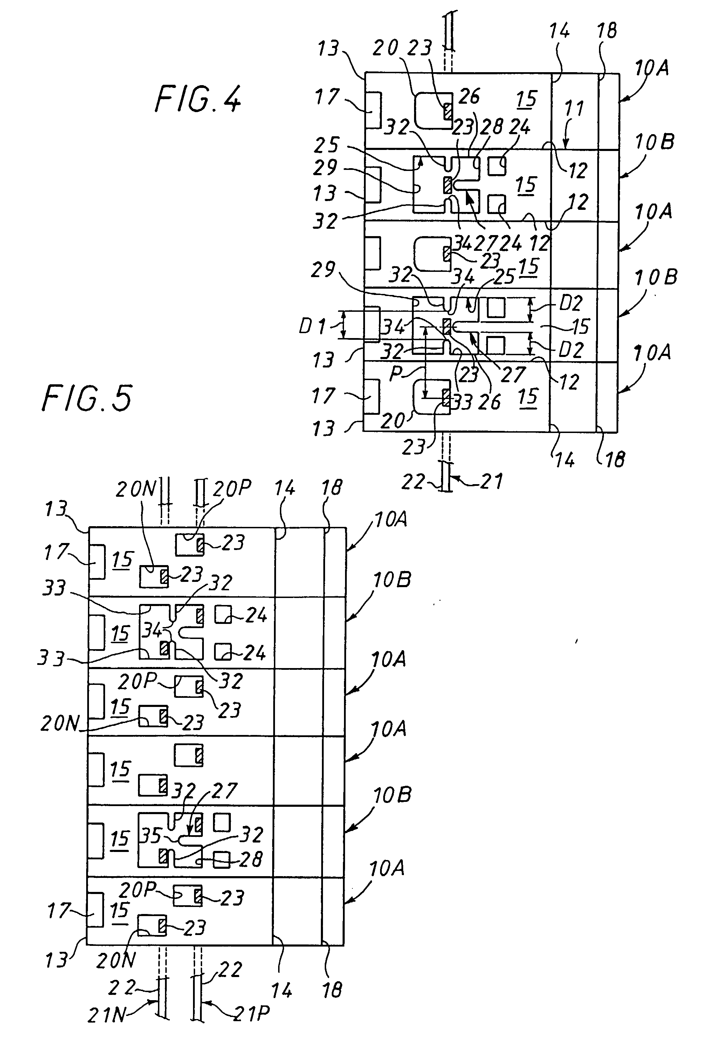

Ils présentent donc, sur chacune des faces latérales 15 de leur boîtier 11, une borne de connexion 20 lorsqu'il s'agit d'appareils électriques unipolaires, figure 4, et, lorsqu'il s'agit d'appareils électriques bipolaires, figure 5, deux bornes de connexion 20P, 20N, qui, de manière usuelle, sont décalées l'une par rapport à l'autre par rapport aux faces arrière 13 et avant 14.

Dans certains pays, l'entrée des alimentations électriques contrôlées se fait par la face latérale 15 orientée vers le haut, et dans d'autres pays par la face latérale 15 orientée vers le bas.

Dans tous les cas, pour minimiser le câblage nécessaire, cette entrée se fait fréquemment à l'aide d'un peigne 21, ou 21P, 21N, formant une barre bus pour l'ensemble des appareils électriques modulaires 10A principaux d'une même rangée, ce peigne 21, ou 21P, 21N, comportant, globalement, d'une part, une longrine 22, qui est destinée à être reliée à la source d'énergie électrique commune à l'ensemble, et, d'autre part, en saillie de place en place sur cette longrine 22, suivant un pas P lié au module de base M, des dents 23, qui sont destinées, elles, à être engagées chacune respectivement dans une borne de connexion 20, ou 20P, 20N, pour la desserte des appareils électriques modulaires 10A principaux concernés.

Les appareils électriques modulaires 10B auxiliaires, qui sont ceux plus précisément concernés par la présente invention, et qui sont par exemple des appareils de signalisation, tels que des voyants, ou des socles de prise de courant, ne comportent pas nécessairement de quelconques bornes de connexion sur les faces latérales 15 de leur boîtier 11.

Dans la forme de réalisation plus particulièrement représentée sur les figures 1 à 5, ces appareils électriques modulaires 10B auxiliaires comportent cependant deux bornes de connexion 24 sur chacune des faces latérales 15 de leur boîtier 11.

Il s'agit par exemple de bornes de connexion propres à permettre de quelconques repiquages.

Mais, lorsque les appareils électriques modulaires 10B auxiliaires en cause sont par exemple des appareils de signalisation, tels que des voyants, de telles bornes de connexion 24 permettent d'assurer leur desserte.

Quoi qu'il en soit, pour la face latérale 15 du boîtier 11 orientée vers le haut, au moins, ces bornes de connexion 24 sont décalées, en pratique en direction de la face avant 14 du boîtier 11, par rapport à celles, 20, ou 20P, 20N, des appareils électriques modulaires 10A principaux.

Pour permettre la mise en place effective d'un peigne 21, sans avoir à intervenir sur les dents 23 inutilisées de celui-ci, il est prévu, de manière connue en soi, sur l'une au moins des faces latérales 15 du boîtier 11 des appareils électriques modulaires 10B auxiliaires, et, en pratique, au moins sur celle de ces faces latérales 15 qui est orientée vers le haut, au moins un évidement 25 propre à recevoir librement l'une au moins de ces dents 23.

Dans la forme de réalisation plus particulièrement représentée sur les figures 1 à 5, seul un tel évidement 25 est prévu sur cette face latérale 15.

Suivant l'invention, une partie au moins de sa profondeur à compter de son débouché 26, cet évidement 25 est au moins partiellement compartimenté par au moins une cloison 27, dite ici par simple commodité cloison verticale, qui s'étend sensiblement parallèlement aux faces principales 12 du boîtier 11.

Dans la forme de réalisation représentée, l'évidement 25 est un évidement borgne, et son débouché 26 a un contour fermé.

En pratique, ce contour est, hors tout, globalement rectangulaire, avec des bords longitudinaux parallèles aux faces principales 12 et des bords transversaux perpendiculaires à celles-ci.

En pratique, également, l'évidement 25 s'étend entre les bornes de connexion 24 et la face arrière 13 du boîtier 11.

Préférentiellement, et tel que représenté, la cloison verticale 27 s'étend à compter de la paroi 28 de l'évidement 25 la plus proche de la face avant 14 du boîtier 11.

En pratique, elle s'étend à mi-largeur pour l'évidement 25.

Autrement dit, elle s'étend à compter de la zone médiane de la paroi 28.

Dans la forme de réalisation représentée, la cloison verticale 27 ne s'étend que sur une fraction de la longueur de l'évidement 25 mesurée parallèlement aux faces principales 12 du boîtier 11, en s'arrêtant, donc, à distance de la paroi 29 de l'évidement 25 la plus proche de la face arrière 13 de ce boîtier 11.

Par exemple, et tel que représenté, cette fraction est inférieure, mais de peu, à la moitié.

Préférentiellement, enfin, et tel que représenté, la cloison verticale 27 s'étend en continu sur toute la profondeur de l'évidement 25, du débouché 26 de celui-ci à son fond 30.

Suivant l'invention, l'évidement 25 est également au moins partiellement compartimenté, sur une partie au moins de sa profondeur, par au moins une autre cloison 32, dite ci-après par simple commodité cloison horizontale, sensiblement perpendiculaire aux faces principales 12 du boîtier 11.

En pratique, cette cloison horizontale 32 s'étend en refend à compter d'une des parois 33 de l'évidement 25 qui sont parallèles aux faces principales 12 du boîtier 11 et elle s'étend sur toute la profondeur de cet évidement 25.

En pratique également, le débouché 26 de l'évidement 25 ayant un contour fermé, il y a, ainsi, dans les formes de réalisation représentées, deux cloisons horizontales 32 issues, chacune respectivement, de deux parois opposées de l'évidement 25, en l'espèce ses parois 33 parallèles aux faces principales 12 du boîtier 11.

Chacune de ces cloisons horizontales 32 ne s'étend que sur une fraction, inférieure à la moitié, de la largeur de l'évidement 25 mesurée perpendiculairement aux faces principales 12 du boîtier 11.

En pratique, dans la forme de réalisation représentée, cette fraction est inférieure au tiers.

Quoi qu'il en soit, la tranche libre 34 de chacune des cloisons horizontales 32 s'étend en deçà de la cloison verticale 27 par rapport à la paroi 33 de l'évidement 25 dont est issue une telle cloison horizontale 32.

Corollairement, chacune des cloisons horizontales 32 s'étend au-delà de la tranche libre 35 de la cloison verticale 27 par rapport à la paroi 28 de l'évidement 25 dont est issue cette cloison verticale 27.

Dans les formes de réalisation représentées, les deux cloisons horizontales 32, qui sont l'une et l'autre à un même niveau, s'étendent par ailleurs globalement sensiblement à la moitié de la longueur de l'évidement 25 mesurée parallèlement aux faces principales 12 du boîtier 11.

En pratique, les deux cloisons horizontales 32 sont symétriques l'une de l'autre par rapport au plan médian de l'évidement 25 qui, perpendiculaire à la face arrière 13 et à la face avant 14 du boîtier 11, passe par la cloison verticale 27.

Quoi qu'il en soit, la distance D1 séparant l'une de l'autre les tranches libres 34 respectives de ces deux cloisons horizontales 32 est du même ordre de grandeur que la distance D2 séparant la cloison verticale 27 de l'une ou de l'autre des parois 33 de l'évidement 25 parallèles aux faces principales 12 du boîtier 11, figure 3.

Dans les formes de réalisation représentées, enfin, l'épaisseur E1 des cloisons horizontales 32 est inférieure à celle E2 de la cloison verticale 27.

L'emprise d'un évidement 25 sur la face latérale 15 concernée du boîtier 11 des appareils électriques modulaires 10B auxiliaires est suffisante pour permettre, aisément, c'est-à-dire sans tâtonnement superflu, l'engagement d'une dent 23 d'un peigne 21, ou 21P 21N, en plusieurs endroits de cet évidement 25, tel que schématisé sur la figure 2.

Par exemple, tel que représenté en trait continu, en position 23U, sur la figure 2, cette dent 23 peut s'engager au centre de l'évidement 25, à proximité immédiate de la cloison verticale 27, dans le prolongement de celle-ci, entre les cloisons horizontales 32.

C'est le cas lorsque, tel que représenté sur la figure 4, les appareils électriques modulaires 10A principaux sont des appareils électriques unipolaires.

La cloison verticale 27 protège alors de tout accès direct de l'extérieur, et, plus précisément, de l'avant, la dent 23 du peigne 21.

Tel que représenté en trait continu, en position 23P, à la figure 2, la dent 23 d'un peigne, alors 21P, peut également s'engager d'un premier côté de la cloison verticale 27, du côté de la face avant 14 du boîtier 11, c'est-à-dire à distance plus ou moins grande de la paroi 28 de l'évidement 25, qui est celle la plus proche de cette face avant 14 du boîtier 11, entre cette paroi 28 et la cloison horizontale 32 correspondante, et, donc, en deçà de cette dernière.

C'est le cas lorsque, tel que représenté sur la figure 5, les appareils électriques modulaires 10A principaux sont des appareils électriques bipolaires.

Dans certains pays, les bornes de connexion 20P, 20N de ces appareils électriques modulaires 10A sont disposées suivant une première implantation, et, dans d'autres, elles sont disposées suivant une autre implantation, inverse de la précédente.

Dans ce cas, et tel que schématisé en traits interrompus sur la figure 2, la dent 23, en position 23P', s'engage de l'autre côté de la cloison verticale 27, en deçà de la cloison horizontale 32 correspondante.

Mais, dans tous les cas, elle se trouve comme précédemment protégée de tout accès direct de l'extérieur, et, plus précisément, de l'avant, d'une part, d'un côté, par la cloison verticale 27, et, d'autre part, du côté opposé au précédent, par le boîtier 11 lui-même.

Conjointement, la dent 23 concernée du peigne 21N s'engage, dans l'évidement 25, dans une position 23N, ou 23N', qui, diagonalement opposée à la position 23P, ou 23P' précédente, se situe, elle, au-delà de la cloison horizontale 32 correspondante par rapport à la cloison verticale 27.

Lorsque, comme en l'espèce, est présent un peigne 21P du côté de la face avant 14 du boîtier 11, le peigne 21N est protégé par ce peigne 21P.

Mais, en outre, la dent 23 concernée de ce peigne 21N, se trouve protégée de tout accès direct de l'extérieur par la cloison horizontale 32 au-delà de laquelle elle s'étend.

Ainsi, lorsque, pour les raisons précédemment exposées, seul un peigne 21N, et il s'agit alors en pratique d'un peigne de neutre, est mis en oeuvre du côté de la face arrière 13 du boîtier 11, la dent 23 concernée de ce peigne 21N se trouve encore protégée de tout accès direct de l'avant par l'une ou l'autre des cloisons horizontales 32 prévues suivant l'invention.

Préférentiellement, et tel que représenté, la longueur de l'évidement 25 mesurée parallèlement aux faces principales 12 est suffisante pour que, dans les positions 23N, 23N', il subsiste, au-delà de celles-ci, en direction de la face arrière 13, une surlongueur supérieure à la profondeur de l'encoche 16.

Cela permet, si désiré, de dégager un appareil électrique modulaire 10B auxiliaire de son support avant de le dégager de la dent 23 concernée du peigne 21N en cause.

Dans la forme de réalisation représentée sur la figure 1, il est également prévu un autre évidement 36 sur l'autre des faces latérales 15 du boîtier 11 des appareils électriques modulaires 10B auxiliaires, pour le cas où, comme cela est le cas dans certains pays, l'entrée des alimentations dans les appareils électriques modulaires 10A principaux se fait sur la face latérale 15 de leur boîtier 11 orientée vers le bas.

En pratique, cet évidement 36 s'étend de l'une à l'autre des faces principales 12 du boîtier 11, à la manière d'une encoche.

Autrement dit, il est ouvert sur chacune des faces principales 12.

Il présente ainsi avantageusement une largeur supérieure à celle de l'évidement 25 précédent, de nature à faciliter la dépose éventuelle d'un tel appareil électrique modulaire 10B auxiliaire sans avoir à toucher au peigne correspondant.

En pratique, également, cet évidement 36 s'étend entre les bornes de connexion 24 correspondantes et la face avant 14 du boîtier 11.

Dans la forme de réalisation représentée, cet évidement 36 est dépourvu de toute cloison.

De fait, les dispositions sont telles que la dent d'un peigne s'y implante usuellement sensiblement au milieu, mais assez près de la paroi 37 la plus proche de la face avant 14, en sorte qu'elle se trouve directement protégée par le boîtier 11.

Conjointement, le peigne alors mis en oeuvre protège en outre par lui-même les bornes de connexion 24 correspondantes.

Suivant la forme de réalisation plus particulièrement représentée sur la figure 6, la largeur de l'un au moins des appareils électriques modulaires 10B auxiliaires, c'est-à-dire la distance D' séparant l'une de l'autre les deux faces principales 12 de son boîtier 11, est sensiblement égale à 2,5 fois le module de base M.

Par exemple, cet appareil électrique modulaire 10B auxiliaire est un socle de prise de courant.

Dans la forme de réalisation représentée, il comporte, côte à côte, sur une même face latérale 15 de son boîtier 11, plusieurs évidements 25, 25'.

En pratique, ces évidements 25, 25' sont au nombre de trois.

Il y a tout d'abord deux évidements 25 entiers, qui, de même type que celui précédemment décrit, comportent, comme ce dernier, une cloison verticale 27 et deux cloisons horizontales 32.

Il y a ensuite un évidement 25' fractionnaire, c'est-à-dire un évidement dont la largeur, mesurée perpendiculairement aux faces principales 12 du boîtier 11, est une fraction du module de base M.

En pratique, cette fraction est égale à la moitié.

En pratique, également, le débouché 26' de cette évidement 25' fractionnaire a un contour ouvert, en débouchant sur l'une des faces principales 12 du boîtier 11.

Il comporte une cloison verticale 27', mais l'épaisseur de celle-ci est moindre de moitié par rapport à l'épaisseur de la cloison verticale 27 des évidements 25.

En outre, l'évidement 25' fractionnaire ne comporte évidemment qu'une cloison horizontale 32, issue de sa seule paroi 33' parallèle aux faces principales 12 du boîtier 11.

Lorsqu'un tel appareil électrique modulaire 10B auxiliaire est accolé à un autre appareil électrique modulaire 10B auxiliaire comportant de manière symétrique un évidement 25' fractionnaire de même type, un évidement 25 se trouve reconstitué par les deux évidements 25' fractionnaires alors adjacents.

En outre, dans la forme de réalisation représentée, l'appareil électrique modulaire 10B auxiliaire ne présente, sur la face latérale 15 concernée de son boîtier 11, qu'une seule borne de connexion 24.

Il s'agit, par exemple, d'une borne de connexion pour prise de terre.

En particulier, il peut y avoir au moins un évidement compartimenté, entier ou fractionnaire, sur l'une et l'autre des faces latérales du boîtier des appareils électriques modulaires auxiliaires concernés.

## Revendications

1. Appareil électrique modulaire, du genre dont le boîtier (11) présente deux faces principales (12) parallèles, et, reliant celles-ci suivant leur contour, une face arrière (13), une face avant (14) et deux faces latérales (15), avec, sur l'une au moins de ces dernières, un évidement 25 propre à recevoir librement l'une au moins des dents (23) d'un peigne (21) formant une barre bus pour d'autres appareils électriques alignés avec celui concerné, caractérisé en ce que, sur une partie au moins de sa profondeur, l'évidement (25) est au moins partiellement compartimenté par au moins une cloison (27), dite ici par simple commodité cloison verticale, qui s'étend sensiblement parallèlement aux faces principales (12) du boîtier (11).

2. Appareil électrique modulaire suivant la revendication 1, caractérisé en ce que la cloison verticale (27) s'étend à compter de la paroi (31) de l'évidement (25) la plus proche de la face avant (14).

3. Appareil électrique modulaire suivant la revendication 2, caractérisé en ce que la cloison verticale (27) s'étend à compter de la zone médiane de la paroi (31).

4. Appareil électrique modulaire suivant l'une quelconque des revendications 2, 3, caractérisé en ce que la cloison verticale (27) ne s'étend que sur une fraction de la longueur de l'évidement (25) mesurée parallèlement aux faces principales (12).

5. Appareil électrique modulaire suivant la revendication 4, caractérisé en ce que ladite fraction est inférieure à la moitié.

6. Appareil électrique modulaire suivant l'une quelconque des revendications 1 à 5, caractérisé en ce que la cloison verticale (27) s'étend sur toute la profondeur de l'évidement (25).

7. Appareil électrique modulaire suivant l'une quelconque des revendications 1 à 6, caractérisé en ce que l'évidement (25) est également au moins partiellement compartimenté, sur une partie au moins de sa profondeur, par au moins une cloison (32), dite ici par simple commodité cloison horizontale, sensiblement perpendiculaire aux faces principales (12) du boîtier (11).

8. Appareil électrique modulaire suivant la revendication 7, caractérisé en ce que la cloison horizontale (32) s'étend en refend à compter d'une paroi (33) de l'évidement (25) parallèle aux faces principales (12) du boîtier (11).

9. Appareil électrique modulaire suivant la revendication 8, caractérisé en ce que la cloison horizontale (32) ne s'étend que sur une fraction, inférieure à la moitié, de la largeur de l'évidement (25), mesurée perpendiculairement aux faces principales (12) du boîtier (11).

10. Appareil électrique modulaire suivant la revendication 9, caractérisé en ce que la tranche libre (34) de la cloison horizontale (32) s'étend en deçà de la cloison verticale (27) par rapport à la paroi (33) de l'évidement (25) dont est issue cette cloison horizontale (32).

11. Appareil électrique modulaire suivant l'une quelconque des revendications 7 à 10, caractérisé en ce que la cloison horizontale (32) s'étend au-delà de la tranche libre (35) de la cloison verticale (27) par rapport à la paroi (28) de l'évidement (25) dont est issue cette cloison verticale (27).

12. Appareil électrique modulaire suivant la revendication 11, caractérisé en ce que la cloison horizontale (32) s'étend sensiblement à la moitié de la longueur de l'évidement (25) mesurée parallèlement aux faces principales (12) du boîtier (11).

13. Appareil électrique modulaire suivant l'une quelconque des revendications 1 à 12, caractérisé en ce que l'épaisseur (E1) de la cloison horizontale (32) est inférieure à celle (E2) de la cloison verticale (27).

14. Appareil électrique modulaire suivant l'une quelconque des revendications 7 à 13, caractérisé en ce que, le débouché (26) de l'évidement (25) ayant un contour fermé, il y a deux cloisons horizontales (32) issues, chacune respectivement, de deux parois (33) opposées de l'évidement (25) parallèles aux faces principales (12) du boîtier (11).

15. Appareil électrique modulaire suivant la revendication 14, caractérisé en ce que les deux cloisons horizontales (32) sont à un même niveau, et la distance (D1) séparant l'une de l'autre leurs tranches libres (34) respectives est du même ordre de grandeur que la distance (D2) séparant la cloison verticale (27) de l'une ou de l'autre des parois (33) de l'évidement (25) parallèles aux faces principales (12) du boîtier (11).

16. Appareil électrique modulaire suivant l'une quelconque des revendications 1 à 15, caractérisé en ce que l'évidement (25) est un évidement borgne.

17. Appareil électrique modulaire suivant l'une quelconque des revendications 1 à 16, caractérisé en ce qu'il comporte, côte à côte, sur la même face latérale (15) du boîtier (11), plusieurs évidements (25, 25').

18. Appareil électrique modulaire suivant la revendication 17, caractérisé en ce que l'un au moins des évidements (25, 25') est un évidement fractionnaire, c'est-à-dire un évidement dont la largeur, mesurée perpendiculairement aux faces principales (12) du boîtier (11), est une fraction du module de base (M).

19. Appareil électrique modulaire suivant la revendication 18, caractérisé en ce que le débouché (26') de l'évidement (25') fractionnaire a un contour ouvert.

20. Appareil électrique modulaire suivant une quelconque des revendications 18, 19, caractérisé en ce que le débouché (26) d'un évidement (25) entier a un contour fermé.

21. Appareil électrique modulaire suivant l'une quelconque des revendications 1 à 20, caractérisé en ce que, au moins une borne de connexion (24) étant présente sur la face latérale (15) concernée, l'évidement (25) s'étend entre cette borne de connexion (24) et la face arrière (13).

22. Appareil électrique modulaire suivant l'une quelconque des revendications 1 à 21, caractérisé en ce que, sur l'autre face latérale (15), il est prévu également un autre évidement (35).

23. Appareil électrique modulaire suivant la revendication 22, caractérisé en ce que ledit autre évidement (35) s'étend de l'une à l'autre des faces principales (12).

24. Appareil électrique modulaire suivant l'une quelconque des revendications 22, 23, caractérisé en ce que, au moins une borne de connexion (24) étant présente sur la face latérale (15) concernée, ledit autre évidement (35) s'étend entre cette borne de connexion (24) et la face avant (14).

25. Appareil électrique modulaire suivant l'une quelconque des revendications 22 à 24, caractérisé en ce que ledit autre évidement (35) est dépourvu de toute cloison.

## Claims

1. A modular electrical apparatus of the kind in which the housing (11) has two parallel main faces (12) and, connecting them along their contour, a rear face (13), a front face (14) and two side faces (15) with, on one at least of the latter, an opening (25) for freely receiving one at least of the teeth (23) of a comb member (21) forming a bus bar for other electrical apparatuses aligned with the apparatus in question, characterised in that, over a part at least of its depth, the opening (25) is at least partially compartmented by at least one partition (27), referred to herein for the sake of convenience as the vertical partition, which extends substantially parallel to the main faces (12) of the housing (11).

2. A modular electrical apparatus according to claim 1 characterised in that the vertical partition (27) extends from the wall (31) of the opening (25), which is closest to the front face (14).

3. A modular electrical apparatus according to claim 2 characterised in that the vertical partition (27) extends from the central region of the wall (31).

4. A modular electrical apparatus according to either one of claims 2 and 3 characterised in that the vertical partition (27) extends only over a fraction of the length of the opening (25), as measured parallel to the main faces (12).

5. A modular electrical apparatus according to claim 4 characterised in that said fraction is less than a half.

6. A modular electrical apparatus according to any one of claims 1 to 5 characterised in that the vertical partition (27) extends over the entire depth of the opening (25).

7. A modular electrical apparatus according to any one of claims 1 to 6 characterised in that the opening (25) is also at least partially compartmented, over a part at least of its depth, by at least one partition (32), referred to herein for the sake of convenience as the horizontal partition, which is substantially perpendicular to the main faces (12) of the housing (11).

8. A modular electrical apparatus according to claim 7 characterised in that the horizontal partition (32) extends in a divided configuration from a wall (33) of the opening (25), which is parallel to the main faces (12) of the housing (11).

9. A modular electrical apparatus according to claim 8 characterised in that the horizontal partition (32) extends only over a fraction, less than a half, of the width of the opening (25), as measured perpendicularly to the main faces (12) of the housing (11).

10. A modular electrical apparatus according to claim 9 characterised in that the free edge (34) of the horizontal partition (32) extends to a position short of the vertical partition (27) with respect to the wall (33) of the opening (25) from which said horizontal partition (32) extends.

11. A modular electrical apparatus according to any one of claims 7 to 10 characterised in that the horizontal partition (32) extends beyond the free edge (35) of the vertical partition (27) with respect to the wall (28) of the opening (25) from which said vertical partition (27) extends.

12. A modular electrical apparatus according to claim 11 characterised in that the horizontal partition (32) extends substantially to half the length of the opening (25), as measured parallel to the main faces (12) of the housing (11).

13. A modular electrical apparatus according to any one of claims 1 to 12 characterised in that the thickness (E1) of the horizontal partition (32) is less than that (E2) of the vertical partition (27).

14. A modular electrical apparatus according to any one of claims 7 to 13 characterised in that, the mouth orifice (26) of the opening (25) being of a closed contour, there are two horizontal partitions (32) each respectively extending from two opposite walls (33) of the opening (25), which are parallel to the main faces (12) of the housing (11).

15. A modular electrical apparatus according to claim 14 characterised in that the two horizontal partitions (22) are at the same level and the distance (D1) separating their respective free edges (34) from each other is of the same order of magnitude as the distance (D2) separating the vertical partition (27) from one or other of the walls (33) of the opening (25), which are parallel to the main faces (12) of the housing (11).

16. A modular electrical apparatus according to any one of claims 1 to 15 characterised in that the opening (25) is a blind opening.

17. A modular electrical apparatus according to any one of claims 1 to 16 characterised in that it comprises a plurality of openings (25, 25') in side-by-side relationship on the same side face (15) of the housing (11).

18. A modular electrical apparatus according to claim 17 characterised in that one at least of the openings (25, 25') is a fractional opening, that is to say an opening whose width as measured perpendicularly to the main faces (12) of the housing (11) is a fraction of the base module (M).

19. A modular electrical apparatus according to claim 18 characterised in that the mouth orifice (26') of the fractional opening (25') is of an open contour.

20. A modular electrical apparatus according to either one of claims 18 and 19 characterised in that the mouth orifice (26) of an entire opening (25) is of a closed contour.

21. A modular electrical apparatus according to any one of claims 1 to 20 characterised in that, at least one connecting terminal (24) being present on the side face (15) in question, the opening (25) extends between said connecting terminal (24) and the rear face (13).

22. A modular electrical apparatus according to any one of claims 1 to 21 characterised in that another opening (35) is also provided on the other side face (15).

23. A modular electrical apparatus according to claim 22 characterised in that said other opening (35) extends from one of the main faces (12) to the other.

24. A modular electrical apparatus according to either one of claims 22 and 23 characterised in that, at least one connecting terminal (24) being present on the side face (15) in question, said other opening (35) extends between said connecting terminal (24) and the front face (14).

25. A modular electrical apparatus according to any one of claims 22 to 24 characterised in that said other opening (35) is devoid of any partition.

## Patentansprüche

1. Modulares elektrisches Gerät von dem Typ, dessen Gehäuse (11) zwei parallele Hauptflächen (12) und eine Rückfläche (13), eine Vorderfläche (14) und zwei Seitenflächen (15) aufweist, welche diese entlang ihres Umfangs verbinden, mit einer Aussparung 25 auf mindestens einer der letzteren, die dafür geeignet ist, mindestens einen von Zähnen (23) eines Kamms (21) frei aufzunehmen, der eine Stromschiene für weitere elektrische Geräte bildet, die mit dem betreffenden in einer Reihe angeordnet sind,
dadurch gekennzeichnet, daß die Aussparung (25) über mindestens einen Teil ihrer Tiefe mindestens teilweise durch mindestens eine Trennwand (27) unterteilt ist, welche hier zur Vereinfachung vertikale Trennwand genannt wird und sich im wesentlichen parallel zu den Hauptflächen (12) des Gehäuses (11) erstreckt.

2. Modulares elektrisches Gerät nach Anspruch 1,
dadurch gekennzeichnet, daß sich die vertikale Trennwand (27) von der Wand (31) der Aussparung (25) aus erstreckt, die sich am nächsten bei der Vorderfläche (14) befindet.

3. Modulares elektrisches Gerät nach Anspruch 2,
dadurch gekennzeichnet, daß sich die vertikale Trennwand (27) von dem mittleren Bereich der Wand (31) aus erstreckt.

4. Modulares elektrisches Gerät nach einem der Ansprüche 2 oder 3,
dadurch gekennzeichnet, daß sich die vertikale Trennwand (27), parallel zu den Hauptflächen (12) gemessen, nur über einen Bruchteil der Länge der Aussparung (25) erstreckt.

5. Modulares elektrisches Gerät nach Anspruch 4,
dadurch gekennzeichnet, daß der Bruchteil kleiner als die Hälfte ist.

6. Modulares elektrisches Gerät nach einem der Ansprüche 1 bis 5,
dadurch gekennzeichnet, daß sich die vertikale Trennwand (27) über die gesamte Tiefe der Aussparung (25) erstreckt.

7. Modulares elektrisches Gerät nach einem der Ansprüche 1 bis 6,
dadurch gekennzeichnet, daß die Aussparung (25) gleichermaßen mindestens teilweise über mindestens einen Teil ihrer Tiefe durch mindestens eine Trennwand (32) unterteilt ist, welche hier zur Vereinfachung horizontale Trennwand genannt wird und im wesentlichen senkrecht zu den Hauptflächen (12) des Gehäuses (11) steht.

8. Modulares elektrisches Gerät nach Anspruch 7,
dadurch gekennzeichnet, daß sich die horizontale Trennwand (32) ausgehend von einem Teilabschnitt von einer zu den Hauptflächen (12) des Gehäuses (11) parallelen Wand (33) der Aussparung (25) erstreckt.

9. Modulares elektrisches Gerät nach Anspruch 8,
dadurch gekennzeichnet, daß sich die horizontale Trennwand (32), senkrecht zu den Hauptflächen (12) des Gehäuses (11) gemessen, nur über einen Bruchteil, der kleiner als die Hälfte ist, der Breite der Aussparung (25) erstreckt.

10. Modulares elektrisches Gerät nach Anspruch 9,
dadurch gekennzeichnet, daß sich die freie Kante (34) der horizontalen Trennwand (32) diesseits der vertikalen Trennwand (27) in bezug auf die Wand (33) der Aussparung (25) erstreckt, von der diese horizontale Trennwand (32) ausgeht.

11. Modulares elektrisches Gerät nach einem der Ansprüche 7 bis 10,
dadurch gekennzeichnet, daß sich die horizontale Trennwand (32) jenseits von der freien Kante (35) der vertikalen Trennwand (27) in bezug auf die Wand (28) der Aussparung (25) erstreckt, von der diese vertikale Trennwand (27) ausgeht.

12. Modulares elektrisches Gerät nach Anspruch 11,
dadurch gekennzeichnet, daß sich die horizontale Trennwand (32), parallel zu den Hauptflächen (12) des Gehäuses (11) gemessen, im wesentlichen in der Mitte der Länge der Aussparung (25) erstreckt.

13. Modulares elektrisches Gerät nach einem der Ansprüche 1 bis 12,
dadurch gekennzeichnet, daß die Dicke (E1) der horizontalen Trennwand (32) kleiner als diejenige (E2) der vertikalen Trennwand (27) ist.

14. Modulares elektrisches Gerät nach einem der Ansprüche 7 bis 13,
dadurch gekennzeichnet, daß die Öffnung (26) der Aussparung (25) eine geschlossene Kontur aufweist und daß es zwei horizontale Trennwände (32) gibt, die jeweils von zwei gegenüberliegenden Wänden (33) der Aussparung (22) ausgehen, die parallel zu den Hauptflächen (12) des Gehäuses (11) liegen.

15. Modulares elektrisches Gerät nach Anspruch 14,
dadurch gekennzeichnet, daß die beiden horizontalen Trennwände (32) auf einer gleichen Höhe liegen, und daß der Abstand (D1), der die eine ihrer freien Kanten (34) von der anderen trennt, jeweils in der gleichen Größenordnung wie der Abstand (D2) liegt, der die vertikale Trennwand (27) von der einen oder der anderen der Wände (33) der Aussparung (25) trennt, die parallel zu den Hauptflächen (12) des Gehäuses (11) liegen.

16. Modulares elektrisches Gerät nach einem der Ansprüche 1 bis 15,
dadurch gekennzeichnet, daß die Aussparung (25) eine blind endende Aussparung ist.

17. Modulares elektrisches Gerät nach einem der Ansprüche 1 bis 16,
dadurch gekennzeichnet, daß es nebeneinander auf der gleichen Seitenfläche (15) des Gehäuses (11) mehrere Aussparungen (25, 25') umfaßt.

18. Modulares elektrisches Gerät nach Anspruch 17,
dadurch gekennzeichnet, daß mindestens eine der Aussparungen (25, 25') eine Teilaussparung ist, d.h. eine Aussparung, deren Breite, senkrecht zu den Hauptflächen (12) des Gehäuses (11) gemessen, ein Bruchteil des Grundmoduls (M) beträgt.

19. Modulares elektrisches Gerät nach Anspruch 18,
dadurch gekennzeichnet, daß die Öffnung (26') der Teilaussparung (25') eine offene Kontur aufweist.

20. Modulares elektrisches Gerät nach einem der Ansprüche 18 oder 19,
dadurch gekennzeichnet, daß die Öffnung (26) einer vollständigen Aussparung (25) eine geschlossene Kontur aufweist.

21. Modulares elektrisches Gerät nach einem der Ansprüche 1 bis 20,
dadurch gekennzeichnet, daß mindestens eine Anschlußklemme (24) an der betreffenden Seitenflächen (15) vorgesehen ist, und daß sich die Aussparung (25) zwischen dieser Anschlußklemme (24) und der Rückfläche (13) erstreckt.

22. Modulares elektrisches Gerät nach einem der Ansprüche 1 bis 21,
dadurch gekennzeichnet, daß auch auf der anderen Seitenfläche (15) eine weitere Aussparung (35) vorgesehen ist.

23. Modulares elektrisches Gerät nach Anspruch 22,
dadurch gekennzeichnet, daß sich die weitere Aussparung (35) von der einen der Hauptflächen (12) zur anderen erstreckt.

24. Modulares elektrisches Gerät nach einem der Ansprüche 22 oder 23,
dadurch gekennzeichnet, daß mindestens eine Anschlußklemme (24) auf der betreffenden Seitenfläche (15) vorgesehen ist, und daß sich die weitere Aussparung (35) zwischen dieser Anschlußklemme (24) und der Vorderfläche (14) erstreckt.

25. Modulares elektrisches Gerät nach einem der Ansprüche 22 bis 24,
dadurch gekennzeichnet, daß die weitere Aussparung (35) überhaupt keine Trennwand aufweist.
